(19) Europäisches Patentamt

European Patent Office

Office européen des brevets

(11) **EP 1 093 845 A2**

(12) **EUROPÄISCHE PATENTANMELDUNG**

(43) Veröffentlichungstag:
25.04.2001 Patentblatt 2001/17

(21) Anmeldenummer: 00122050.8

(22) Anmeldetag: 11.10.2000

(51) Int. Cl.⁷: **B01J 13/02**, B01J 13/06,
B01J 13/08, B01J 21/06,
B01J 35/00, B01J 35/10,
B01J 37/03, C01G 23/047,
C01G 23/053

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.10.1999 DE 19950479**

(71) Anmelder:
**Henkel Kommanditgesellschaft auf Aktien
40589 Düsseldorf-Holthausen (DE)**

(72) Erfinder:
• **Lange, Ilona, Dr.
40764 Langenfeld (DE)**
• **Roth, Marcel, Dr.
40589 Düsseldorf (DE)**

(54) **Mikrokapseln**

(57)  Es werden Mikrokapseln beansprucht, die einen Kern und einen den Kern umhüllendes Wandmaterial enthalten und die dadurch gekennzeichnet sind, daß das Wandmaterial photokatalytisch aktive Komponenten, vorzugsweise nanopartikuläres $TiO_2$, aufweist. Das verkapselte Kernmaterial kann dadurch freigesetzt werden, daß durch Einstrahlen von Licht sich die Struktur der Kapselwand verändert beziehungsweise das Wandmaterial zerstört und das eingeschlossene Kernmaterial langsam freigesetzt wird.

EP 1 093 845 A2

**Beschreibung**

Die vorliegende Erfindung betrifft Mikrokapseln, enthaltend einen Kern und ein den Kern umgebendes Wandmaterial, ein Verfahren zur Herstellung dieser Mikrokapseln sowie die Verwendung der Mikrokapseln.

Mikrokapseln sind Pulver beziehungsweise Teilchen mit einem Durchmesser von etwa 1 bis etwa 5000 μm, worin ein fester, flüssiger oder gasförmiger Stoff von einem festen, in der Regel polymeren, Wandmaterial umhüllt ist. Mikrokapseln werden insbesondere bei Arzneimitteln eingesetzt, z.B. zur Überführung von flüssigen, insbesondere auch von flüchtigen Verbindungen, in feste, freifließende Pulver, zur Stabilitätserhöhung der Wirkstoffe, zur Retardierung von Wirkstoffen, zum organspezifischen Transport der Wirkstoffe, zur Geschmacksüberdeckung und auch zur Vermeidung von Unverträglichkeiten mit anderen Wirk-und Hilfsstoffen. Ein weiteres Einsatzgebiet von Mikrokapseln ist die Herstellung von kohlefreien Reaktivdurchschreibpapieren.

Durch die Auswahl der Wandmaterialien, wie natürlichen oder synthetischen Polymeren, kann die Wandung dicht, permeabel oder semipermeabel gestaltet werden. Somit ergibt sich eine Fülle von Möglichkeiten, die eingekapselte Substanz gesteuert freizusetzen, z.B. durch Zerstören der Hülle oder durch Permeation oder auch durch chemische Reaktionen, die im Inneren der Mikrokapseln ablaufen können.

In Wasch- und Reinigungsmitteln werden insbesondere die flüchtigen Duftstoffe in verkapselter Form eingesetzt.

Die Zerstörung des Kapselmaterials, d.h. der Wandung, kann mechanisch von außen erfolgen und auch durch Erhitzen über den Siedepunkt des Kernmaterials von innen. Ferner können die Inhaltsstoffe durch Auflösen, Schmelzen oder Verbrennen des Wandmaterials freigesetzt werden.

Die Freisetzung des Kernmaterials über semipermeable Kapselwände kann z.B. durch Erhöhrung des osmotischen Drucks im Inneren der Kapsel und Aufbrechen des Wandmaterials erfolgen, oder, wenn die Kapselwand für das Kernmaterial durchlässig ist, so tritt es langsam durch die Kapselwandung hindurch und wird freigesetzt. Eine weitere Möglichkeit besteht darin, daß die Kapselwandung ihre Eigenschaften durch Verändern der sie umgebenden Phase (Wechsel von Luft zu Wasser, Änderung des pH-Wertes, etc.) semipermeabel wird und die Freisetzung des Kernmaterials wie zuvor beschrieben erfolgen kann.

Die aus dem Stand der Technik bekannten Freisetzungsmechanismen sind bei Anwendungen, bei denen sich das Kapsel umgebende Milieu nicht ändert und auch keine Temperaturänderungen oder mechanische Krafteinwirkungen auftreten, unzureichend. In derartigen Fällen ist der Einsatz von Mikrokapseln beziehungsweise von verkapselten Materialien, nicht möglich.

Der vorliegenden Erfindung lag die Aufgabe zugrunde, Mikrokapseln zur Verfügung zu stellen, die über einen Freisetzungsmechanismus verfügen, der keine mechanischen Einwirkungen von Druck beziehungsweise Kraft oder Änderungen von Temperatur oder Milieu der Umgebung erfordert.

Überraschenderweise wurde festgestellt, daß bei Mikrokapseln, die in ihrem Wandmaterial photokatalytisch aktive Substanzen enthalten, durch Einstrahlen von Licht die Struktur ihrer Wandung verändern beziehungsweise das Wandmaterial zerstört und das eingeschlossene Kernmaterial langsam freigesetzt wird.

Gegenstand der vorliegenden Erfindung sind demgemäß Mikrokapseln, enthaltend einen Kern und einen den Kern umhüllendes Wandmaterial, die dadurch gekennzeichnet sind, daß das Wandmaterial photokatalytisch aktive Komponenten aufweist.

Beispiele für photokatalytisch aktive Materialien sind $TiO_2$ vom Anatas-Typ und vom Rutil-Typ, ZnO und Ceroxid, wobei $TiO_2$, insbesondere $TiO_2$ vom Anatastyp, besonders bevorzugt ist.

Die photokatalytische Aktivität der voranstehend genannten Komponenten (Verbindungen) beruht darauf, daß sie eingestrahltes Licht nicht vollständig remittieren sondern zumindest einen Teil absorbieren. Das absorbierte Licht wird in thermische, z.B. chemische Energie umgewandelt, was zu einer Zerstörung des umgebenden Mediums führen kann. Ein bekanntes Phänomen ist z.B. der UV-induzierte Abbau von weißen Kunststoffen, die als Weißpigment $TiO_2$ enthalten. Im Laufe der Zeit wird der Kunststoff völlig zerstört. Für PVC äußert es sich in der Bildung von Polyen-Sequenzen bis zur völligen Schwarzfärbung, andere Kunststoffe werden spröde und unbrauchbar.

In der vorliegenden Erfindung wird die photokatalytische Aktivität Verbindungen zum Freisetzen von verkapselten Inhaltsstoffe ausgenutzt. Beim Bestrahlen der Kapseln mit Licht, in der Regel Sonnenlicht, nehmen die Teilchen die Lichtenergie auf, setzen diese in thermische Energie um, wodurch das Wandmaterial langsam zerstört wird und die Freisetzung des eingeschlossenen Kernmaterials bewirkt. Üblicherweise werden die Kapseln mit Licht mit einer Wellenlänge von 290 bis 3000 nm bestrahlt.

Die Größe der in der Kapselwandung eingeschlossenen photokatalytisch aktiven Komponenten sollte so bemessen sein, daß die Stabilität des Kapselmaterials vor der Applikation beziehungsweise vor dem Einsatz in den entsprechenden Produkten nicht beeinträchtigt wird. Vorzugsweise weisen diese Komponenten eine Teilchengröße im Nanobereich, üblicherweise von 2 bis 500 nm, vorzugsweise von 2 bis 200 nm und besonders bevorzugt von 2 bis 20 nm, auf. Die Geschwindigkeit des Freisetzungsmechanismuses kann dabei nicht nur durch die Auswahl der photokatalytisch aktiven Komponente festgelegt werden, sondern auch durch die Teilchengröße dieses Materials. Da die Remission des Lichts und damit die Absorption direkt mit der Teilchengröße nach der Gleichung von Rayleigh korreliert, bedeutet das, daß je kleiner die Teilchengröße ist, um so höher ist die photokatalytische Aktivität.

Die volumengewichtete mittlere Kristalitgröße ist mit Röntgenbeugungsverfahren, insbesondere über eine Scherrer-Analyse, bestimmbar. Das Verfahren ist beispielsweise beschrieben in: C. E. Krill, R. Birringer: „Measuring average grain sizes in nanocrystalline materials „, Phil. Mag. A 77, S. 621. (1998). Demnach kann die volumengewichtete mittlere Kristallitgröße D bestimmt werden durch den Zusammenhang

$$D = K\lambda/\beta\cos\theta.$$

Dabei ist $\lambda$ die Wellenlänge der verwendeten Röntgenstrahlung, $\beta$ ist die volle Breite auf halber Höhe des Reflexes an der Beugungsposition $2\theta$. K ist eine Konstante der Größenordnung 1, deren genauer Wert von der Kristallform abhängt. Man kann diese Unbestimmtheit von K vermeiden, indem man die Linienverbreiterung als integrale Weite $\beta_i$ bestimmt, wobei $\beta_i$ definiert ist als die Fläche unter dem Röntgenbeugungsreflex geteilt durch dessen maximaler Intensität $I_0$:

$$\beta_i = 1/I_0 \int_{2\theta_1}^{2\theta_2} I(2\theta)d(2\theta)$$

Dabei sind die Größen $2\theta_1$ und $2\theta_2$ die minimale und maximale Winkelposition des Bragg-Reflexes auf der $2\theta$-Achse. $I(2\theta)$ ist die gemessene Intensität des Reflexes als Funktion von $2\theta$. Unter Verwendung von diesem Zusammenhang ergibt sich als Gleichung zur Bestimmung der volumengewichteten mittleren Kristallitgröße D: $D = \lambda/\beta_i\cos\theta$.

Üblicherweise sind die photokatalytisch aktiven Verbindungen in den erfindungsgemäßen Mikrokapseln in einer Menge von 0,01 bis 30 Gew.-%, bezogen auf das Wandmaterial, enthalten.

Das Wandmaterial der erfindungsgemäßen Mikrokapseln kann ein beliebiges, zur Herstellung von Mikrokapseln geeignetes Material sein, wie beispielsweise natürliche oder synthetische Polymere. Beispiele für derartige Polymere sind Polymere Polysacharide, wie Agarose oder Cellulose, Proteine, wie Gelatine, Gummi arabicum, Albumin oder Fibrinogen, Ethylcellulose, Methylcellulose, Carboxymethylethylcellulose, Celluloseacetate, Polyanillin, Polypyrrol, Polyvinylpyrolidon, Polystyrol, Polyvinylchlorid, Polyethylen, Polypropylen, Copolymere aus Polystyrol und Maleinsäureanhydrid, Epoxidharze, Polyethylenimine, Copolymere aus Styrol und Methylmethacrylat, Polyacrylate und Polymethacrylate, Polycarbonate, Polyester, Silikone, Methylcellulose, Gemische aus Gelatine und Wasserglas, Gelatine und Polyphosphat, Celluloseacetat und Phthalat, Gelatine und Copolymeren aus Maleinsäureanhydrid und Methylvinylether, Celluloseacetatbutyrat sowie beliebige Gemsiche der voranstehenden eingesetzt werden.

Das Wandmaterial kann gegebenenfalls vernetzt sein. Übliche Vernetzer sind Glutaraldeyd, Harnstoff/Formaldehyharze, Taninverbindungen, wie Taninsäure, und deren Gemische.

Auch das Kernmaterial kann aus beliebigen, festen, flüssigen oder gasförmigen Materialien bestehen, die in verkapselter Form in entsprechende Produkte eingearbeitet werden sollen.

Die Herstellung der Mikrokapseln kann in an sich bekannter Weise erfolgen. Beispiele für mögliche Herstellungsverfahren sind Phasentrennverfahren, auch Koazervation genannt, mechanisch-physikalische Verfahren oder Grenzflächen.

Koazervation bedeutet, daß ein gelöstes Polymer in eine polymerreiche, noch lösungsmittelhaltige Phase mittels Desolvatation überführt wird. Das Koazervat lagert sich an der Grenzfläche des zu verkapselnden Materials unter Ausbildung einer zusammenhängenden Kapsewand an und wird durch Trocknung oder Polymerisation verfestigt.

Zum Umhüllen fester Kernmaterialien eignen sich auch mechanisch-physikalische Verfahren, worin das Umhüllen in der Wirbelschicht oder durch Sprühtrocknung erfolgt.

In den genannten Grenzflächen-Polymerisationsverfahren erfolgt die Wandbildung durch Polykondensation oder Polyaddition aus monomeren oder oligomeren Ausgangsstoffen an der Grenzfläche einer Wasser/Öl-Emulsion.

Zur Herstellung der erfindungsgemäßen Mikrokapseln werden die photokatalytisch aktiven Teilchen zunächst mit den Ausgangsmaterialien für das Wandmaterial vermischt und anschließend der Mikroverkapselung unterworfen.

Die Mikrokapseln gemäß der Erfindung können insbesondere dort eingesetzt werden, wo sie Licht ausgesetzt sind. Sie eignen sich zum Beispiel in solchen Produkten, die unter Lichtausschluß, z.B. in lichtundurchlässigen Verpackungen gelagert werden und nach Applikation gezielt belichtet oder einfach dem Sonnenlicht ausgesetzt werden.

Ein weiterer Gegenstand der vorliegenden Erfindung ist daher die Verwendung der Mikrokapseln in Wasch- und Reinigungsmitteln.

Vorzugsweise enthalten die Mikrokapseln in dieser Ausführungsform flüchtige, in Wasch- und Reinigungsmitteln übliche Komponenten, z.B. Duftstoffe. Beim Trocknen der gereinigten Substrate werden diese in der Regel dem Sonnenlicht ausgesetzt, während des Trockenvorgangs kann der verkapselte Duftstoff langsam freigesetzt werden.

In einer weiteren Ausführungsform werden die erfindungsgemäßen Mikrokapseln in Klebstoffen, z.B. in Zweikomponentenklebstoff eingesetzt. In dieser Ausführungsform können die Mikrokapseln als Kernmaterial eine der reaktiven Klebstoffkomponenten oder Vernetzer enthalten. Es ist möglich, die beiden hochreaktiven Klebstoffkomponenten bereits als fertiges Gemisch anzubieten, wobei dieses in einer lichtundurchlässigen Verpackung geschehen sollte. Beim Auftragen dieses Gemisches auf ein entsprechendes Substrat erfolgt das Belichten der Mikrokapseln, entweder gezielt durch eine Lampe mit entsprechender Wellenlänge oder durch Sonnenlicht, wodurch eine langsame Freisetzung der Vernetzerkomponente erfolgt und die Reaktion zwischen den beiden Komponenten abläuft.

Ein weiteres Einsatzgebiet der erfindungsgemäßen Mikrokapseln ist der Einsatz in Zweikomponentenbeschichtungsmitteln, wie Lacken etc. Auch hier ist es möglich, die beiden Lackkomponenten, von denen eine in Form von erfindungsgemäßen Mikrokapseln vorliegt, in einer Verpackung (Darreichungsform) anzubieten. Beim Aussetzen des Anstrichmittels von Licht entsprechender Wellenlänge erfolgt die Vernetzungsreaktion zwischen den einzelnen Komponenten und die Ausbildung der Beschichtung.

Noch ein weiteres Einsatzgebiet der erfindungsgemäßen Mikrokapseln sind kosmetische und dermatologische Hautpflegemittel. In dieser Ausführungsform sind als Kernmaterial entsprechende Hautschutzmittel oder Wirkstoffe enthalten. Auf die Haut aufgetragene Kosmetika oder Medikamente werden in der Regel dem Sonnenlicht ausgesetzt. Es erfolgt die langsame Zerstörung der Kapselwand und Freisetzung des entsprechenden Mittels.

Noch eine weitere Ausführungsform ist der Einsatz in Haarpflegemitteln. In dieser Ausführungsform enthalten die Mikrokapseln als Kernmaterialien vorzugsweise Duftstoffe oder Haarpflegemittel. Die Mikrokapseln werden entweder in Haarprodukte eingearbeitet, die erst nach der Wäsche auf das Haar aufgebracht werden und dort verbleiben oder sie weisen gegenüber den Haaren eine gewisse Substantivität auf, so daß sie mit Wasser nicht direkt ausgespült werden. Das Haar ist üblicherweise dem Sonnenlicht eine lange Zeit ausgesetzt, so daß eine langsame Zerstörung der Kapselwand erfolgen kann und die entsprechenden Wirkstoffe langsam freigesetzt werden.

Die in die erfindungsgemäßen Kapsel bevorzugt eingearbeiteten nanoskaligen $TiO_2$-Partikel vom Anatas-Typ sind aus dem Stand der Technik nicht bekannt.

Ein weiterer Gegenstand der vorliegenden Erfindung ist kristallines $TiO_2$ vom Anatas-Typ, das eine Teilchengröße von 2 bis 500 nm aufweist.

Noch ein weiterer Gegenstand der vorliegenden Erfindung ist demgemäß ein Verfahren zur Herstellung von nanopartikulärem $TiO_2$, worin eine Titanverbindung in Gegenwart eines organischen Lösungsmittels hydrolisiert und das sich gebildete $TiO_2$ in Wasser beziehungsweise einer wässerigen Lösung stehen gelassen wird.

Üblicherweise wird durch Hydrolyse von flüssigen Titanverbindungen ein röntgenamorphes Material erhalten. Überraschenderweise wurde festgestellt, daß, wenn man röntgenamorphes $TiO_2$ über einen gewissen Zeitraum in Wasser beziehungsweise einer wasserhaltigen Lösung lagert, kristallines $TiO_2$ erhält.

Die Herstellung der $TiO_2$-Partikel erfolgt vorzugsweise derart, daß zunächst eine Emulsion aus einem unpolaren Lösungsmittel, Wasser und einem Emulgator hergestellt und anschließend die Titanverbindung zugefügt wird. In einer weiteren Verfahrensvariante wird die Titanverbindung in dem organischen Lösungmittel gelöst und dann wird Wasser in einer entsprechenden Menge zugesetzt. Die zweite Verfahrensvariante bietet sich insbesondere dann an, wenn Titanalkoholate als Ausgangsverbindungen verwendet werden, die sich in den entsprechenden Alkoholen gut lösen.

Nach der Hydrolyse kann das erhaltene Material entweder zunächst filtriert und vom Lösungsmittel entfernt werden, oder es wird direkt mit Wasser versetzt und darin über einen gewissen Zeitraum stehengelassen oder gerührt. Während des Stehenlassens bzw. Rührens bildet sich die Anatas-Modifikation aus.

In einer bevorzugten Ausführungsform wird der entstandene amorphe Niederschlag zunächst vom Lösungsmittel befreit und getrocknet. Das getrocknete Material wird dann in Wasser aufgenommen und über einen entsprechenden Zeitraum, gegebenenfalls unter Rühren, in Wasser stehengelassen.

Das Lagern in Wasser erfolgt vorzugsweise mindestens 12 Stunden, in der Regel von 5 bis 36, vorzugsweise bis 24 Stunden. Eine Beschleunigung des Kristallisationsverfahrens kann z.B. im Autoklaven erreicht werden.

**Beispiele**

**Beispiel 1:**

Zu 90 g einer Mischung n-Heptan/AOT-Na (Sulfobernsteinsäure-bis-2-ethylhexylester Natriumsalz) des Gewichtsverhältnisses 1:2 wurden 10 g $H_2O$ zugegeben. Die Mischung wurde gerührt bis eine klare Lösung (Mikroemulsion) entstand. Zu der gerührten Mischung wurden innerhalb von 10 Minuten 5 g Tetraisopropylorthotitanat zugegeben, dies entspricht einem überstöchiometrischen Verhältnis an Wasser. Nach Koagulation des Pulvers mit Aceton wurde überschüssiger Emulgator in einer Soxhleth-Apparatur weitgehend abgetrennt. Anschließend wurde bei 70°C im Vakuumtrockenschrank getrocknet.

Anschließend wurde das Titanoxid für 24 h in einer kleinen Menge dest. Wasser gerührt, filtriert und bei 110°C getrocknet. Das Rühren in Wasser bewirkte ein Ausheilen von Gitterfehlstellen, so daß das zunächst röntgenamorphe Material in den kristallinen Zustand der Anatasmodifikation überging.
Die aus transmissionselektronischen Aufnahmen ermittelte Teilchengröße der Pulverpartikel lag unter 10 nm. Die Auswertung des (101)-Peaks bei 20=25.3° mit Hilfe der Scherrer Formel lieferte eine volumengewichtete Kristallitgröße von 5 nm.

**Beispiel 2:**

In 100 ml wasserfreiem Isopropylalkohol wurden 5,0 g Tetraisopropylorthotitanat gelöst. Hierzu gab man unter Rühren eine überstöchiometrische Menge von 10,0 g Wasser. Nach Koagulation des entstandenen Pulvers mit Aceton wurde bei 70°C im Vakuumtrockenschrank getrocknet.

Anschließend wurde das Titanoxid für 24 h in 500 ml dest. Wasser gerührt, filtriert und bei 110°C getrocknet. Das Rühren in Wasser bewirkte ein Ausheilen von Gitterfehlstellen, so daß das zunächst röntgenamorphe Material in den kristallinen Zustand der Anatasmodifikation überging.
Die Auswertung des (101)-Peaks bei 20=25.3° mit Hilfe der Scherrer Formel lieferte eine volumengewichtete Kristallitgröße von 250 nm.

**Beispiel 3:**

In 100 ml wasserfreiem Isopropylalkohol wurden 5,0 g Tetraisopropylorthotitanat und 1,0 g des Emulgators Brij 30 gelöst. Hierzu gab man unter Rühren eine überstöchiometrische Menge von 10,0 g Wasser. Nach Koagulation des entstandenen Pulvers mit Aceton wurde bei 70°C im Vakuumtrockenschrank getrocknet.

Anschließend wurde das Titanoxid für 24 h in 500 ml dest. Wasser gerührt, filtriert und bei 110°C getrocknet. Das Rühren in Wasser bewirkte ein Ausheilen von Gitterfehlstellen, so daß das zunächst röntgenamorphe Material in den kristallinen Zustand der Anatasmodifikation überging.
Die Auswertung des (101)-Peaks bei 20=25.3° mit Hilfe der Scherrer Formel lieferte eine volumengewichtete Kristallitgröße von 70 nm.

**Beispiel 4:**

In 100 ml wasserfreiem Isopropylalkohol wurden 5,0 g Tetraisopropylorthotitanat und 1,0 g des Emulgators Brij 30 sowie 0,3 g Natriumethanolat gelöst. Anschließend versetzte man mit 150 ml Aceton und erhitzte 1 h bis zum Rückfluß. Mittels Einengen am Rotationsverdampfer bei einer Wasserbadtemperatur von 60°C wurde das Pulver koaguliert. Anschließend trocknete man im Trockenschrank bei 100°C.

Das gebildete Titanoxid wurde für 24 h in 500 ml dest. Wasser gerührt, filtriert und bei 110°C getrocknet. Die Auswertung des (101)-Peaks bei 20=25.3° mit Hilfe der Scherrer Formel lieferte eine volumengewichtete Kristallitgröße von 45 nm.

**Mikroverkapselungsverfahren:**

Ein handelsüblicher Duftstoff (Rosenöl, türkisch, der Fa. Robertet, Grasse; Sanderöl, ostasiatisch, der Fa. Melchers, Bremen; Perubalsam der Robertet, Grasse; Lasandinöl, marokkanisch, der Fa. Chauvet) wurde in an sich bekannter Weise mittels Koazervation aus Gelatine und Gummi arabicum verkapselt. Dazu wurden die nanoskaligen Partikel in der gewünschten Menge zunächst mit der Gelatine vermischt. Es wurden Kapseln mit einer Kapselwanddicke von 5 μm hergestellt.

**Ergebnisse:**

Die gemäß den oben beschriebenen Verfahren hergestellten Kapseln wurden mit Licht der Wellenlänge von 295-3000 nm bestrahlt. Als Strahlungsquelle diente das UV-Gerät „Sol 2„ der Firma Dr. K. Hönle GmbH. Die Gesamtbestrahlungsstärke für die Simulation des Sonnenspektrums lag bei 910 W/m$^2$, 295-3000 nm.

Das natürliche Sonnenlicht lag im Wellenlängenbereich von 290-800 nm.

Tabelle 1

| Anatas*/Gew.-% | Bestrahlungsdauer | Kapselwanddicke | Erste merkliche Duftfreisetzung |
|---|---|---|---|
| 0,01 | 24h | 5 μm | 25 h |
| 0,5 | 1 h | 5 μm | 75 min |
| 1,0 | 30 min | 5 μm | 35 min |
| 1,5 | 20 min | 5 μm | 15 min |
| 5 | 2 min | 5 μm | 1min |

\* Konzentration von Anatas im Wandmaterial

**Patentansprüche**

1. Mikrokapseln, enthaltend einen Kern und ein den Kern umhüllendes Wandmaterial, **dadurch gekennzeichnet, daß** das Wandmaterial photokatalytisch aktive Verbindungen aufweist.

2. Mikrokapseln nach Anspruch 1, **dadurch gekennzeichnet, daß** die photokatalytisch aktive Verbindungen nanopartikuläres $TiO_2$ sind.

3. Mikrokapseln nach Anspruch 2, **dadurch gekennzeichnet, daß** $TiO_2$ vom Anatas-Typ enthalten ist.

4. Mikrokapseln nach einem der Ansprüche 1 bis 3, **dadurch gekennzeichnet, daß** die photokatalytisch aktiven Verbindungen eine Teilchengröße von 2 bis 200 nm aufweisen.

5. Mikrokapseln nach einem der Ansprüche 1 bis 4, **dadurch gekennzeichnet, daß** die photokatalytisch aktiven Verbindungen in einer Menge von 0,01 bis 30 Gew.-%, bezogen auf das Wandmaterial, enthalten sind.

6. Mikrokapseln nach einem der Ansprüche 1 bis 5, **dadurch gekennzeichnet, daß** das Kernmaterial freigesetzt wird durch Bestrahlen des Wandmaterials mit Licht mit einer Wellenlänge von 290 bis 3000 nm.

7. Mikrokapseln nach einem der Ansprüche 1 bis 6, **dadurch gekennzeichnet, daß** das Kernmaterial ausgewählt ist aus Duftstoffen, reaktiven Komponenten, wie Klebstoffen, Vernetzer für Klebstoffe, Lackkomponenten, Vernetzer für Lackkomponenten, medizinischen und kosmetischen Wirkstoffen zur topischen Applikation.

8. Verfahren zur Herstellung von Mikrokapseln, worin ein Gemisch aus dem Wandmaterial beziehungsweise einer Vorstufe davon und dem $TiO_2$ und das Kernmaterial in an sich bekannter Weise der Mikroverkapselung unterworfen werden.

9. Verfahren nach Anspruch 8, **dadurch gekennzeichnet, daß** die Mikrokapseln durch Koazervation hergestellt werden.

10. Verfahren nach Anspruch 8 oder 9, **dadurch gekennzeichnet, daß** das Kernmaterial ausgewählt ist aus natürlichen und synthetischen Polymeren.

11. Verfahren nach Anspruch 10, **dadurch** gekennzeichnet, daß als Polymere Polysacharide, wie Agarose oder Cellulose, Proteine, wie Gelatine, Gummi arabicum, Albumin oder Fibrinogen, Ethylcellulose, Methylcellulose, Carboxymethylethylcellulose, Celluloseacetate, Polyanillin, Polypyrrol, Polyvinylpyrolidon, Polystyrol, Polyvinylchlorid, Polyethylen, Polypropylen, Copolymere aus Polystyrol und Maleinsäureanhydrid, Epoxidharze, Polyethylenimine, Copolymere aus Styrol und Methylmethacrylat, Polyacrylate und Polymethacrylate, Polycarbonate, Polyester, Silikone, Methylcellulose, Gemische aus Gelatine und Wasserglas, Gelatine und Polyphosphat, Celluloseacetat und Phthalat, Gelatine und Copolymeren aus Maleinsäureanhydrid und Methylvinylether, Celluloseacetatbutyrat sowie beliebige Gemsiche der voranstehenden eingesetzt werden.

12. Verwendung der Mikrokapseln nach einem der Ansprüche 1 bis 7, in Wasch- und Reinigungsmitteln, in medizinischen und kosmetischen Produkten, in Klebstoffen und Anstrichmitteln.

13. Kristallines $TiO_2$, **dadurch gekennzeichnet, daß** es eine Teilchengröße von 2 bis 500 nm aufweist.

14. Kristallines $TiO_2$ nach Anspruch 13, **dadurch gekennzeichnet, daß** es eine Teilchengröße von 2 bis 200 nm, insbesondere von 2 bis 20 nm, aufweist.

15. Kristallines $TiO_2$ nach Anspruch 14**, dadurch gekennzeichnet, daß** es in der Anatas-Modifikation vorliegt.

16. Verfahren zur Herstellung von nanoskaligem $TiO_2$, worin eine Titanverbindung in einer Mikroemulsion hydrolysiert wird und das sich gebildete $TiO_2$ in Wasser beziehungsweise einer wasserhaltigen Flüssigkeit stehen gelassen wird (bis sich ein kristallines Produkt gebildet hat).

17. Verfahren nach Anspruch 16, **dadurch gekennzeichnet, daß** als Titanverbindung ein Titan-$C_1$-$C_4$-Alkoholat eingesetzt wird.

18. Verfahren nach einem der Ansprüche 16 oder 17, **dadurch gekennzeichnet, daß** zur Hydrolyse der Titanverbindung Wasser in mindestens stöchiometrischer Menge, vorzugsweise in mindestens 2-fachem Überschuß eingesetzt wird.